# EUROPÄISCHE PATENTANMELDUNG

(11) **EP 1 239 659 A1**
(43) Veröffentlichungstag der Anmeldung: **11.09.2002**
(21) Anmeldenummer: 01104591.1
(22) Anmeldetag: 06.03.2001
(51) Int. Cl.: H04N 1/387, H04N 1/00

(54) **Verfahren und Vorrichtung zur digitalen Herstellung eines Bilds**

(71) Anmelder: IMIP LLC, Wilmington, Delaware 19801 (US)
(72) Erfinder: Maier, Michael, 8112 Otelfingen/Zürich (CH); Gerber, Hans, 5034 Suhr (CH)
(74) Vertreter: Freeman, Avi

(57) **Zusammenfassung**

Für die Herstellung eines fotografischen Bilds von einer in elektronischer Form vorliegenden Vorlage (V) werden mittels einer digitalen Aufzeichnungsanordnung die digitalen Bilddaten der Vorlage auf einen blattförmigen Bildträger (P) aufgezeichnet, speziell aufbelichtet. Der Bildträger befindet sich dabei in Aufzeichnungsposition auf einer Aufzeichnungsbühne (10). Während der Positionierung des Bildträgers (P) auf der Aufzeichnungsbühne wird der Bildträger mittels einer fotoelektrischen Abtasteinrichtung (21) hinsichtlich Grösse und Position relativ zur Aufzeichnungsbühne (10) vermessen. Anhand der dabei ermittelten Vermessungsdaten wird eine Positions- und Grössenkorrektur vorgenommen. Im Falle einer fotografischen Aufzeichnung kann diese Korrektur durch eine entsprechende Verstellung der Abbildungsoptik erfolgen. Alternativ werden die Bilddaten der Vorlage (V) rechnerisch transformiert und erst die transformierten Bilddaten werden auf den Bildträger (P) aufgezeichnet. Die Transformation der Bilddaten besteht im wesentlichen aus einer Bildverschiebung und eventuell einer Anpassung der Bildgrösse sowie erforderlichenfalls noch einer Bilddrehung.

Durch die Vermessung des Bildträgers (P) auf der Aufzeichnungsbühne (10) und die Positions- und Grössenkorrektur in Abhängigkeit der bei der Vermessung ermittelten Werte können Abmessungsschwankungen und Positionierungsfehler des Bildträgers aufgefangen und damit das herzustellende Bild unter Einhaltung der üblichen Toleranzen optimal auf den Bildträger aufgezeichnet werden.

## Beschreibung

Die Erfindung betrifft ein Verfahren und eine Vorrichtung zur digitalen Herstellung eines Bilds von einer in elektronischer Form vorliegenden Vorlage durch bildpunktweises Aufzeichnen der Bildinformation der Vorlage auf einen blattförmigen Bildträger gemäss den Oberbegriffen der unabhängigen Ansprüche 1 bzw. 11.

Digitale Bilderzeugungsgeräte auf fotografischer Basis, sogenannte digitale fotografische Printer, erzeugen Bilder bzw. Kopien durch Aufbelichten der Bildinformation der zugrundeliegenden, in elektronisch gespeicherter Form vorliegenden Vorlage auf ein fotoempfindliches Kopiermaterial. Eine Möglichkeit dafür besteht darin, die Bildinformation der Vorlage mittels eines geeigneten elektrooptischen, pixelweise arbeitenden Wandlerorgans bildmässig optisch darzustellen, also eine optische Darstellung der Vorlage zu erzeugen, und diese optische Darstellung der Vorlage auf das Kopiermaterial abzubilden und damit aufzubelichten. Als elektrooptisches Wandlerorgan kommen dabei sowohl aktive (selbstleuchtende) als auch passive (modulierende) elektrooptische Anordnungen in Frage; typische Beispiele sind Katodenstrahlröhren, in Transmission oder Reflexion betriebene Flüssigkristallzellenfelder, Leuchtdiodenfelder, Elektroluminiszenzzellenfelder und neuerdings auch sog. digitale Mikrospiegelfelder.

Andere digitale Bilderzeugungsgeräte verwenden Farbdrucker, in der Regel Tintenstrahldrucker. Hierbei wird die digitale Bildinformation der zugrundeliegenden Vorlage mittels mehrerer Druckköpfe, die meistens je mit mehreren Druckdüsen ausgestattet sind, bildpunktweise auf ein Bildträgermaterial aufgezeichnet (gedruckt).

Eine weit verbreitete Art von digitalen Bilderzeugungsgeräten (beispielsweise sog. digitale Minilabs) ist zur Verarbeitung von Bildträgermaterial in Form von Einzelblättern eingerichtet. Im allgemeinen wird dabei das Aufzeichnungsmaterial auf einer Rolle vorrätig gehalten, und von dieser Rolle werden einzelne Blätter der jeweils erforderlichen Länge abgeschnitten und auf eine Aufzeichnungsbühne transportiert, wo dann die digitale Bildaufzeichnung - durch Drucken oder durch fotografisches Belichten - stattfindet.

Ein Problem bei der Verarbeitung von Blattmaterial besteht in der präzisen Positionierung der Bätter auf der Aufzeichnungsbühne. Die Blätter werden normalerweise nach dem Abschneiden von der Rolle mittels Transportbänder oder ähnlicher Transportvorrichtungen längs einer geradlinigen Transportbahn auf die Aufzeichnungsbühne bewegt und dort in eine definierte Aufzeichnungsposition gebracht. Während die Posititionierung in Längsrichtung (d.i. die Transportrichtung) im allgemeinen mit ausreichender Genauigkeit möglich ist, ergeben sich beim Transport von Blattmaterial aber oft seitliche Abweichungen quer zur Transportrichtung. Ausserdem kann es zu (meist geringfügigen) Verdrehungen des Blattmaterials kommen, so dass die Kanten des rechteckigen Blattmaterials nicht genau parallel bzw. senkrecht zur Transportrichtung verlaufen. Eine weitere Schwierigkeit ergibt sich dadurch, dass die Breite des Blattmaterials in der Praxis immer gewissen Schwankungen (Abweichungen vom Nominalwert) unterworfen ist. Beispielsweise ist gemäss allgemein anerkannten Normen für Aufzeichnungsmaterial der nominellen Breite 10,2 cm eine Schwankung von ±0,2 mm zulässig.

Bei der Bildherstellung wird zwischen randlosen Bildern und Bildern mit Rand unterschieden. Für randlose Bilder stimmt die effektive Bildgrösse (d.i. der mit Bildinformation beaufschlagte Bereich des Aufzeichnungsmaterials) idealerweise exakt mit der Blattgrösse des Aufzeichnungsmaterials überein. Wegen unvermeidlicher Toleranzen - siehe oben - wird die Bildgrösse jedoch in der Praxis geringfügig grösser gewählt, wobei ein Randüberhang von maximal 0,3 mm allgemein als akzeptierbar erachtet wird. Für Bilder mit Rand muss die effektive Bildgrösse natürlich um die Randabmessungen kleiner sein als die Blattgrösse. Hierbei gelten allgemein noch engere Toleranzen - es wird nur eine (lineare) Abweichung von maximal ±0,1 mm als zulässig erachtet. Wenn die genannten Toleranzgrenzen eingehalten werden sollen, muss das Blattmaterial entsprechend präzis auf der Aufzeichnungsbühne positioniert werden, was aus den vorstehend erwähnten Gründen nicht immer oder zumindest nicht ohne erheblichen Aufwand möglich ist.

Durch die vorliegende Erfindung sollen nun diese Schwierigkeiten behoben und ein Verfahren und eine Vorrichtung der gattungsgemässen Art dahingehend verbessert werden, dass sowohl randlose Bilder als auch Bilder mit Rand unter Einhaltung der genannten Toleranzgrenzen hergestellt werden können.

Die Lösung dieser der Erfindung zugrundeliegenden Aufgabe ergibt sich aus den im kennzeichnenden Teil der unabhängigen Ansprüche beschriebenen Merkmalen des erfindungsgemässen Verfahrens und der erfindungsgemässen Vorrichtung.

Gemäss dem Hauptgedanken der Erfindung wird also der Bildträger während seiner Positionierung auf der Aufzeichnungsbühne hinsichtlich seiner Grösse und seiner Position relativ zur Aufzeichnungsbühne vermessen. Anhand der dabei gewonnenen Vermessungsdaten wird anschliessend eine Positions- und Grössenkorrektur so vorgenommen, dass das zu erzeugende Bild optimal auf den Bildträger passt. Die Positions- und Grössenkorrektur erfolgt entweder im Falle einer fotografischen Aufzeichnung durch entsprechende Verstellung einer Abbildungsoptik oder durch Transformation (Umrechnung) der Bilddaten der Vorlage oder ggf. auch durch eine Kombination der beiden Massnahmen. Die Transformation der Bilddaten umfasst eine Bildverschiebung, eventuell eine Grössenanpassung und ggf. auch noch eine Bilddrehung. Im einfachsten Fall genügt eine Bildverschiebung entsprechend dem Positionierungsfehler des Bildträgers auf der Aufzeichnungsbühne und eventuell noch eine Anpassung der Bildgrösse an die tatsächliche Breite des Bildträgers. Auf eine Bilddrehung kann in der Regel verzichtet werden, da erfahrungsgemäss die in der Praxis auftretenden Verdrehungsfehler des Bildträgers vernachlässigbar sind.

Besonders vorteilhafte Ausgestaltungen und Weiterbildungen der Erfindung sind in den abhängigen Ansprüchen beschrieben.

Im folgenden wird die Erfindung anhand der Zeichnung näher erläutert. Es zeigen:
- Fig. 1: eine schematische Skizze eines Ausführungsbeispiels der erfindungsgemässen Vorrichtung,
- Fig. 2-3: zwei Skizzen zur Erläuterung der Abtastung eines Bildträgers,
- Fig. 4: eine Skizze zur Erläuterung der Berechnung von Vermessungsdaten,
- Fig. 5: ein Blockschema des erfindungsgemässen Verfahrens und
- Fig. 6: eine Prinzipskizze zur Erläuterung des Aufbaus einer Abtasteinrichtung.

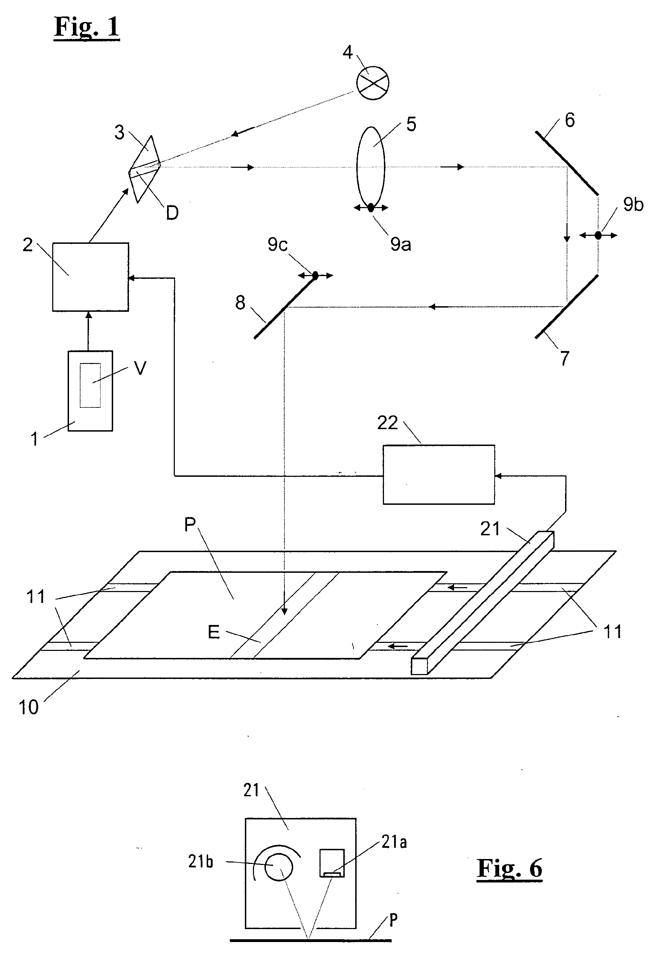

Die Figur 1 zeigt ein Prinzipschema einer Ausführungsform der erfindungsgemässen Vorrichtung. Die Vorrichtung umfasst einen Speicher 1, eine Steuerung 2, eine Beleuchtungsquelle 4, ein pixelweise arbeitendes elektrooptisches Wandlerorgan 3 in Form eines Mikrospiegelfelds, eine aus einem Objektiv 5 und drei Umlenkspiegeln 6, 7 und 8 bestehende Abbildungsoptik und durch Pfeile 9a-9c symbolisierte Antriebsmittel für die Umlenkspiegel und das Objektiv. Ferner umfasst die Vorrichtung eine Aufzeichnungsbühne 10, auf der ein Blatt P eines fotografischen Kopiermaterials in Aufzeichnungsposition positioniert ist. An der Aufzeichnungsbühne 10 sind zwei Transportriemen 11 angedeutet, die in nicht dargestellter aber an sich bekannter Weise motorisch angetrieben sind und mittels welcher das Blatt P (in der Zeichnung von der rechten Seite her) in an sich bekannter Weise auf der Aufzeichnungsbühne 10 in die Aufzeichnungsposition transportierbar ist bzw. wieder aus dieser entfernt werden kann (in der Zeichnung nach der linken Seite hin).

Die Vorlage, von der ein körperliches Bild bzw. eine Kopie hergestellt werden soll, liegt in elektronischer Form gespeichert vor. Die sich aus der Gesamtheit aller Helligkeits- und Farbinformationen für jeden einzelnen Bildpunkt der zu kopierenden Vorlage V zusammensetzende Bildinformation der Vorlage V liegt dabei im Speicher 1, aus dem sie mittels der Steuerung 2 bildpunktweise und ggf. nach Farbanteilen separiert abrufbar ist.

Die beiden Umlenkspiegel 6 und 7 sind relativ zu einander ortsfest und stehen im rechten Winkel zu einander, so dass sie den Strahlengang um 180° umlenken. Der Umlenkspiegel 8 ist parallel zum Umlenkspiegel 7 angeordnet und lenkt den Strahlengang um 90° um auf das auf der Aufzeichnungsbühne positionierte Blatt P des fotografischen Kopiermaterials. Der Umlenkspiegel 8 bewegt sich in die gleiche Richtung wie die beiden Umlenkspiegel 6 und 7, aber mit der doppelten Geschwindigkeit, so dass die optische Weglänge zwischen dem Objektiv 5 und dem Blatt P unabhängig von der Stellung der Umlenkspiegel konstant bleibt. Durch die Bewegung der Umlenkspiegel in der beschriebenen Weise wird ein streifenförmiger Belichtungsbereich E über das (feststehende) Blatt P des Kopiermaterials bewegt. Durch Verstellung des Objektivs 5 in Kombination mit einer entsprechenden Verstellung der Umlenkspiegel 6-8 kann der Abbildungsmassstab verändert werden.

Die Steuerung 2 liest die Bildinformation eines ersten streifenförmigen Abschnitts der Vorlage V aus und steuert damit das pixelweise arbeitende elektrooptische Wandlerorgan 3 an, welches anhand der ihm zugeführten Signale eine bildmässige optische Darstellung des streifenförmigen Abschnitts erzeugt. Das elektrooptische Wandlerorgan 3 kann eine rechteckige Anordnung von z.B. 1280 x 1024 Einzelspiegeln umfassen, von denen z.B. nur 1280 x 300 oder - bei der gezeigten Diagonalstellung - 1919 x 192 Spiegel für die Bilddarstellung benutzt werden. Es kann aber auch z.B. durch ein Leuchtdiodenfeld mit einer entsprechenden Anzahl von Einzeldioden gebildet sein. Die vom elektrooptischen Wandlerorgan 3 erzeugte - ebenfalls streifenförmige - optische Darstellung des streifenförmigen Abschnitts der Vorlage V wird nun mittels der Abbildungsoptik 5-8 in dem streifenförmigen Belichtungsbereich E auf das auf der Aufzeichnungsbühne 10 positionierte Blatt P des Kopiermaterials abgebildet und dabei auf dieses aufbelichtet. Daraufhin wird ein nächster streifenförmiger Abschnitt ausgelesen, davon eine optische Darstellung erzeugt und diese in einem um eine entsprechende Weglänge vorgeschobenen Belichtungsbereich auf das Blatt P aufbelichtet. Das ganze wiederholt sich nun so lange, bis die gesamte Vorlage erfasst ist und der letzte streifenförmige Abschnitt der Vorlage ausgelesen, davon eine optische Darstellung erzeugt und diese auf das Blatt P des Kopiermaterials aufbelichtet ist.

Die streifenförmigen Abschnitte der Vorlage liegen nicht nahtlos nebeneinander, sondern sie überlappen sich zu einem grossen Teil (quer zu ihrer Längsrichtung). Dies führt dazu, dass sich auch die auf das Blatt P aufbelichteten Streifen überlappen, das Blatt P also je nach Überlappungsgrad mehrfach belichtet wird. Dieser Mehrfachbelichtung wird dadurch Rechnung getragen, dass die Helligkeitswerte der einzelnen Bildpunkte der optischen Darstellungen der Abschnitte (ggf. farbselektiv) durch die Steuerung 2 entsprechend herabgesetzt werden, so dass die das Kopiermaterial in den jeweiligen Bildpunkten beaufschlagenden Kopierlichtmengen in der Summe wieder korrekt sind. Diese Belichtungsmethode ist unter der Bezeichnung TIG (Time Integration Grayscale) allgemein bekannt.

Soweit entspricht die Vorrichtung in Aufbau und Funktionsweise vollständig der z.B. in der EP-A-0 986 243 beschriebenen Vorrichtung und bedarf deshalb keiner weiteren Erläuterung.

Wie schon erwähnt, ist es für die streifenweise Aulbelichtung erforderlich, dass eine Relativbewegung zwischen dem streifenförmigen Belichtungsbereich E und dem Kopiermaterialblatt P erfolgt. Beim vorstehenden Beispiel erfolgt dies durch die Bewegung des Objektivs 5 und der Umlenkspiegel 6-8. Alternativ dazu kann die Relativbewegung selbstverständlich auch durch einen entsprechenden Vorschub des Kopiermaterialblatts P erfolgen.

Anstelle des Mikrospiegelfelds 3 und der zugehörigen Abbildungsoptik 5-8 kann auch jede andere pixelweise arbeitende, digitale optische Belichtungsanordnung eingesetzt werden. Beispiele dafür sind, wie schon erwähnt, Katodenstrahlröhren, Leuchtdiodenfelder, Elektroluminiszenzfelder oder Flüssigkristallfelder. Schliesslich kann die Bildaufzeichnung im Prinzip auch im Druckverfahren mittels eines für solche Zwecke geeigneten (Farb-) Druckers erfolgen, wobei die Bildinformation der Vorlage V dem Drucker über die Steuerung 2 zugeführt würde bzw. die Steuerung Bestandteil des Druckers wäre und die Druckköpfe des Druckers sich relativ zu dem auf der Aufzeichnungsbühne positionierten Blatt P des Aufzeichnungsmaterials bewegen würden.

Im folgenden werden der Kürze halber einzelne Blätter P von Aufzeichnungsmaterial als Papier bezeichnet. Entsprechend wird die Aufzeichnungsbühne 10 als Papierbühne bezeichnet. Alle Ausführungen gelten unabhängig von der gewählten Bildaufzeichnungstechnologie, also gleichermassen für digitale fotografische Belichtung und für digitales Drucken.

Gemäss dem wesentlichsten Gedanken der Erfindung wird das Papiers P auf der Papierbühne 10 vermessen und die Aufzeichnung der Bildinformation anhand der dabei gewonnenen Messdaten gesteuert. Für diesen Zweck ist die erfindungsgemässe Bildherstellungsvorrichtung an der Einlaufseite der Papierbühne 10 mit einer fotoelektrischen Abtasteinrichtung 21 und mit einem mit dieser zusammenwirkenden Positionsrechner 22 ausgestattet, welcher wiederum mit der Steuerung 2 verbunden ist und dieser die aktuellen Vermessungsdaten des Papiers P auf der Papierbühne 10 zuführt.

Die Abtasteinrichtung 21 erstreckt sich in geringem Abstand oberhalb der Papierbühne 10 über die gesamte Breite derselben und besteht im wesentlichen aus einer linearen Anordnung von fotoelektrischen Wandlerelementen sowie einer sich ebenfalls über die gesamte Breite der Papierbühne erstreckenden Beleuchtungsanordnung. Die fotoelektrischen Wandlerelemente sind vorzugsweise als lineares CCD-Feld ausgebildet (charged coupled devices), wie es z.B. in Zeilen-Abtastern (Scannern) eingesetzt wird. Die örtliche Auflösung der Wandlerelementanordnung kann z.B. 300 dpi (entsprechend 300 Elemente pro 2,54 cm) betragen, was bei einer Gesamtlänge von z.B. ca. 25 cm insgesamt rund 3000 Wandlerelemente ergibt. Die Beleuchtungsanordnung kann als langgestreckte stabförmige Lichtquelle ausgebildet sein. Der prinzipielle Aufbau der Abtasteinrichtung 21 geht aus der schematischen Skizze der Fig. 6 hervor. Die Beleuchtungsanordnung ist dort mit 21b bezeichnet, die Anordnung der fotoelektrischen Wandlerelemente mit 21a.

Das Papier P bewegt sich auf seinem Weg von der Rolle, von der es abgeschnitten wurde, zur Aufzeichnungsposition auf der Papierbühne 10 unter der Abtasteinrichtung 21 durch und wird von dieser zeilenweise fotoelektrisch abgetastet. Es wird dabei mit Licht von der Beleuchtungsanordnung der Abtasteinrichtung 21 beaufschlagt, und das vom Papier P bzw. von der Papierbühne 10 ausserhalb des Papiers P remittierte Licht wird von den fotoelektrischen Wandlerelementen der Abtasteinrichtung 21 aufgefangen und in entsprechende elektrische Signale umgewandelt. Diese werden vom Positionsrechner 22 zeilenweise ausgelesen und zur Berechnung der interessierenden Vermessungsdaten des Papiers P auf der Papierbühne 10 ausgewertet. Falls das Papier P fotografisches Material ist, wird zur Beleuchtung selbstverständlich nicht-aktinisches Licht verwendet, typischerweise Infrarot im nicht-aktinischen Bereich.

Abtasteinrichtungen der hier eingesetzten Art sowie ihre elektrische Ansteuerung sind allgemein bekannt, beispielsweise etwa von zeilenweise arbeitenden Scannern oder Büro-Kopiergeräten oder auch aus der DE-A 198 58 968 (Priorität US 006565 vom 14.01.1998), so dass der Fachmann diesbezüglich keiner näheren Erläuterung bedarf. Für das Verständnis der vorliegenden Erfindung ist lediglich wichtig festzuhalten, dass das von einem einzelnen Wandlerelement erzeugte Signal deutlich unterschiedlich ist, je nach dem, ob sich unter dem Wandlerelement Papier P befindet oder nicht. Daher kann anhand des Signalpegelunterschieds benachbarter Wandlerelemente eine Begrenzungskante des Papiers P erkannt und ihre Position (in Längsrichtung der Wandleranordnung) festgestellt werden. Die Position misst sich dabei in Pixeleinheiten der Wandleranordnung, also mit der Auflösung der Wandleranordnung. Da die Abtasteinrichtung 21 in fester räumlicher Beziehung zur Papierbühne 10 steht, ist damit die (in Längsrichtung der Wandleranordnung gemessene) Position einer erkannten Papierkante relativ zur Papierbühne 10 bekannt.

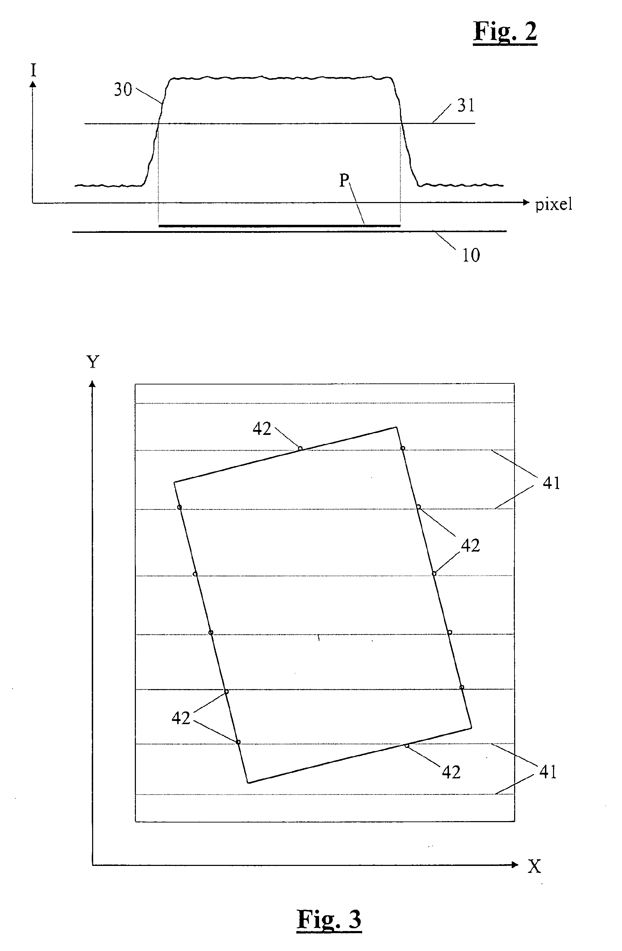

Die Figur 2 verdeutlicht das Prinzip der Papierkantenerfassung. Sie zeigt einen typischen (etwas idealisiert dargestellten) Signalverlauf 30 längs einer Abtastzeile, also die von den einzelnen Wandlerelementen der Abtasteinrichtung 21 bei der Abtastung einer Zeile erzeugten Signalpegel. Die Abszisse gibt die einzelnen Wandlerelemente der Abtasteinrichtung an, die Ordinate die Intensität der von den Wandlerelementen erzeugten Signale. Im Bereich der beiden Begrenzungskanten des Papiers P ändert sich der Signalpegel jeweils innerhalb eines eng begrenzten Übergangsbereichs (wenige benachbarte Wandlerelemente) sprunghaft. Diejenigen Wandlerelemente, bei denen der Signalpegel erstmals bzw. letztmals über einem Schwellenwert 31 liegt, definieren (für die jeweilige Abtastzeile) die Position der Begrenzungskanten des Papiers P. Der Schwellenwert 31 wird natürlich vorgängig anhand von mehreren Testmessungen ermittelt.

Für die Berechnung der Vermessungsdaten des Papiers P wird ein kartesisches Koordinatensystem verwendet, wobei der Koordinatenursprung beispielsweise in der Mitte der Papierbühne 10 liegt und die beiden orthogonalen Koordinatenachsen X und Y parallel bzw. senkrecht zur (idealen) Transportrichtung des Papiers P gelegt werden, so dass die Längsrichtung der Abtasteinrichtung 21 parallel zur X-Achse liegt. Damit erfassen die Wandlerelemente der Abtasteinrichtung 21 die Positionen der Papierkanten in X-Richtung. Die jeweilige Position des Papiers P in Y-Richtung ist durch die Vorschubinkremente des Papiertransports gegeben. Es wird ferner vorausgesetzt, dass beim Transport des Papiers P über die relativ kurze Wegstrecke von der Abtasteinrichtung 21 bis in die Aufzeichnungsposition (normalerweise mittig auf der Papierbühne) keine Positionierungsfehler mehr auftreten. Diese Voraussetzung ist in der Praxis mit den üblichen Transportvorrichtungen mit ausreichender Genauigkeit erfüllbar.

Ein Papierblatt P wird (in der Zeichnung von rechts kommend) auf die Papierbühne 10 aufgegeben und unter der Abtasteinrichtung 21 hindurch in die Aufzeichnungsposition transportiert. Dabei wird in an sich bekannter Weise mittels separater optischer oder mechanischer Sensoren die Vorderkante des in die Papierbühne 10 eintretenden Papiers P erfasst und dann das Papier um eine seiner (nominellen) Länge und den Abmessungen der Papierbühne 10 entsprechende Wegstrecke weitertransportiert. Anstelle separater Sensoren kann auch die Abtasteinrichtung 21 selbst zum Erfassen der Vorderkante des Papiers herangezogen werden. Sobald sich das Papier unter der Abtasteinrichtung 21 befindet, wird es mit jedem Vorschubinkrement zeilenweise abgetastet, und die zugehörigen Abtastwerte werden im Positionsrechner 22 gespeichert.--Dies wird solange wiederholt, bis das gesamte Papierblatt P unter der Abtasteinrichtung 21 hindurchgelaufen und abgetastet ist.

Der Positionsrechner 22 ermittelt aus den abgespeicherten Abtastwerten in jeder Abtastzeile die Positionen (X-Koordinaten) der Papierkanten bzw. Kantenpunkte wie anhand der Fig. 2 erläutert. Die zugehörige Y-Koordinate der Kantenpunkte ist durch die jeweilige Abtastzeile selbst gegeben. Die Gesamtheit der X- und Y-Koordinaten der so ermittelten Kantenpunkte stellt den durch die Papierkanten definierten Umriss des Papierblatts dar. Die Fig. 3 verdeutlicht dies. Darin sind mit 41 einige willkürlich herausgegriffene Abtastzeilen bezeichnet, und die Bezugsnummern 42 bezeichnen die zu den jeweiligen Abtastzeilen gehörenden Kantenpunkte des abgetasteten Papiersblatts.

Da das Papier P auf der Papierbühne 10 von derjenigen Position, an der sein Eintritt in die Papierbühne erfasst wurde (separate Sensoren oder Abtasteinrichtung 21 - siehe oben), um eine (von der nominellen Blattlänge und den Abmessungen der Papierbühne abhängige) fest vorgegebene Wegstrecke (in Y-Richtung) transportiert wird, stehen die Y-Koordinaten der Randpunkte 42 in fester Beziehung (konstantes Offset) zum Koordinatenursprung in der Mitte der Papierbühne. Für das weitere wird davon ausgegangen, dass die Y-Koordinaten der Randpunkte im Positionsrechner 22 bereits um diese feste Wegstrecke (Offset) bereinigt sind (Koordinatenverschiebung), so dass also der Mittelpunkt eines fehlerfrei positionierten und die nominelle Länge und Breite aufweisenden Papierblatts P mit dem Koordinatenursprung (Mitte der Papierbühne) zusammenfällt.

Wenn das Papierblatt P von den nominellen Werten abweichende Abmessungen (Länge, Breite) aufweist und/oder wenn beim Transport des Papiers auf die Papierbühne ein Positionierungsfehler auftritt, dann liegt der Mittelpunkt des Papierblatts P ausserhalb des Koordinatenursprungs, wobei seine Koordinaten den Positionierungsfehler in X- und Y-Richtung angeben. Der Positionsrechner 22 berechnet nun die Koordinaten des Blattmittelpunkts und einen eventuellen Verdrehungswinkel sowie auch die tatsächliche Länge und die tatsächliche Breite des Papierblatts P.

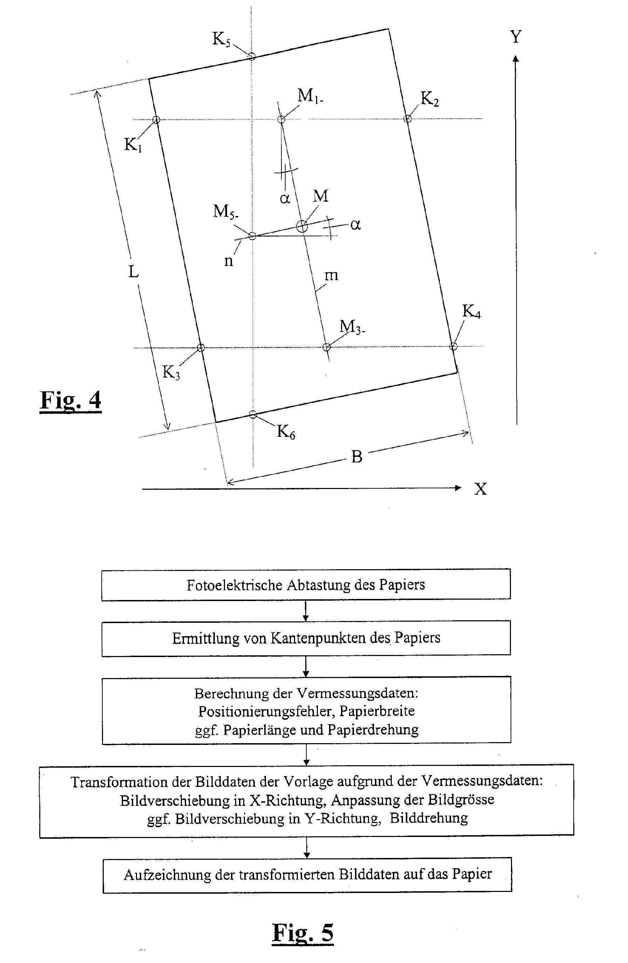

Wie aus der Fig. 4 deutlich wird, sind zur Berechnung des Positionierungsfehlers, des Verdrehungswinkels und der tatsächlichen Blattabmessungen die Koordinaten von (mindestens) sechs Kantenpunkten K₁ - K₆ des abgetasteten Papiers P erforderlich. Dabei wird vorausgesetzt, dass das Papier P rechteckig ist, was in der Praxis immer mit ausreichender Genauigkeit erfüllt ist. Der Mittelpunkt des Papiers ist mit M bezeichnet. Vorzugsweise werden vier Kantenpunkte K₁ - K₄ (mit paarweise gleicher Y-Koordinate) auf den beiden Seitenkanten und zwei Kantenpunkte K₅ - K₆ (mit gleicher X-Koordinate) auf den Vorder- und Hinterkanten des Papiers P zur Berechnung herangezogen, die umgekehrte oder jede andere Konstellation ist aber auch möglich.

Im Interesse einer möglichst wenig fehlerbehafteten Rechnung erfolgt die Wahl der zur Berechnung herangezogenen Kantenpunkte K₁ - K₆ so, dass die beiden Abtastzeilen, zu denen die Kantenpunkte K₁ - K₄ gehören, möglichst weit auseinanderliegen. Gleichzeitig müssen aber die Kantenpunkte K₁ - K₄ einen genügenden Sicherheitsabstand von der Vorder- bzw. Hinterkante des Papiers aufweisen. Da die nominelle Papiergrösse bekannt ist und die Dimensionsschwankungen des Papiers sowie der zu erwartende Positionierungsfehler vergleichsweise klein sind, ist die Auswahl passender Abtastzeilen aber einfach.

Die Berechnung der Vermessungsdaten erfolgt in an sich bekannter Weise nach den Methoden der analytischen Geometrie. Zunächst werden die Mittelpunkte M₁₋₂, M₃₋₄ und M₅₋₆ zwischen den Kantenpunkten K₁ und K₂, K₃ und K₄ sowie K₅ und K₆ bestimmt. Dann wird diejenige Gerade m bestimmt, welche durch die beiden Mittelpunkte M₁₋₂ und M₃₋₄ geht. Dann wird diejenige Gerade n bestimmt, die durch den Mittelpunkt M₅₋₆ geht und zur Geraden m senkrecht steht. Schliesslich wird der Schnittpunkt der beiden Geraden m und m bestimmt, welcher den Mittelpunkt M des Papierblatts P darstellt. Die Koordinaten des Mittelpunkts M ergeben die Positionierungsfehler Δx und Δy des Papierblatts P in X- bzw. Y-Richtung. Der Winkel α, um welchen das Papier gegenüber der Ideallage gedreht ist, ergibt sich offensichtlich aus der Steigung der Geraden n. Die tatsächliche Länge L des Papiers berechnet sich aus dem Abstand der beiden Kantenpunkte K₅ und K₆ multipliziert mit dem Cosinus des Winkels α. Entsprechend berechnet sich die tatsächliche Breite B des Papiers aus dem Abstand der beiden Kantenpunkte K₁ und K₂ oder K₃ und K₄ multipliziert mit dem Cosinus des Winkels α.

Die durch die Positionierungsfehler Δx und Δy, die Länge L und die Breite B des Papiers P und den Verdrehungswinkel α des Papiers P gebildeten Vermessungsdaten des Papiers P werden vom Positionsrechner 22 der Steuerung 2 übergeben. Diese transformiert aufgrund dieser Vermessungsdaten die im Speicher 1 vorliegenden Bilddaten der Vorlage V so, dass das herzustellende Bild korrekt auf das Papier aufgezeichnet wird. Die Transformation der Bilddaten umfasst (im Extremfall) eine Bildverschiebung um die Positionierungsfehler Δx und Δy, eine Bilddrehung um den Verdrehungswinkel α und eine Anpassung der Bildgrösse in Abhängigkeit von Länge L und Breite B des Papiers. Die Transformation der Bilddaten erfolgt nach den bekannten Methoden der digitalen Bildverarbeitung und bedarf deshalb für den Fachmann keiner näheren Erläuterung. Die Bildverschiebung in X-Richtung sowie die Grössenanpassung des aufzuzeichnenden Bilds kann auch durch eine entsprechende Verstellung des Objektivs 5 und erforderlichenfalls auch der Umlenkspiegel 6-8 erfolgen.

In der Praxis dominieren erfahrungsgemäss vor allem Positionierungsfehler Δx quer zur Transportrichtung des Papiers P sowie Schwankungen der Papierbreite B. Positionierungsfehler Δy in Transportrichtung, Schwankungen der Papierlänge L und Verdrehung α des Papiers können im allgemeinen vernachlässigt werden. Unter diesen Umständen vereinfacht sich natürlich die Berechnung der Vermessungsdaten erheblich, weil nur noch der Positionierungsfehler Δx und die Breite B des Papiers zu bestimmen sind. Theoretisch sind für die Berechnung nur zwei in derselben Abtastzeile liegende Kantenpunkte auf den beiden Seitenkanten des Papiers erforderlich, in der Praxis wird man jedoch mehrere Kantenpunkte heranziehen und eine Mittelung durchführen. Entsprechend vereinfacht sich auch die erforderliche Transformation der Bilddaten der Vorlage V, da nur mehr eine Bildverschiebung um den Positionierungsfehler Δx in X-Richtung sowie eine Anpassung der Bildgrösse an die tatsächliche Papierbreite B gemacht werden muss. Wiederum kann die Bildverschiebung und die Bildgrössenanpassung auch durch eine entsprechende Verstellung des Objektivs 5 sowie ggf. der Umlenkspiegel 6-8 erreicht werden.

Die Figur 5 stellt die wichtigsten Schritte des erfindungsgemässen Verfahrens nochmals in Form eines Blockdiagramms übersichtlich dar. Die Texte in den einzelnen Blöcken sind selbsterklärend und bedürfen daher keiner weiteren Kommentierung.

Mit dem erfindungsgemässen Verfahren und der entsprechenden erfindungsgemässen Vorrichtung ist es möglich, sowohl Bilder mit Rand als auch randlose Bilder unter Einhaltung der eingangs erwähnten Toleranzgrenzen für die Bildgrösse und die Bildposition auf dem Papier herzustellen.

## Patentansprüche

1. Verfahren zur Herstellung eines Bilds von einer in elektronischer Form vorliegenden Vorlage (V) durch bildpunktweises Aufzeichnen der digitalen Bilddaten der Vorlage auf einen blattförmigen Bildträger (P), der auf eine Aufzeichnungsbühne (10) transportiert und dort positioniert wird, **dadurch gekennzeichnet, dass** der Bildträger (P) während seines Transports auf der Aufzeichnungsbühne (10) hinsichtlich Grösse und relativer Lage zur Aufzeichnungsbühne vermessen wird, dass anhand der bei der Vermessung des Bildträgers ermittelten Vermessungsdaten (Δx, Δy, B, L, α) eine Positions- und Grössenkorrektur für die Aufzeichnung der digitalen Bilddaten der Vorlage (V) auf den blattförmigen Bildträger (P) durchgeführt wird.

2. Verfahren nach Anspruch 1, **dadurch gekennzeichnet, dass** die Aufzeichnung der Bilddaten unter Verwendung einer Abbildungsoptik (5-8) durch Aufbelichtung erfolgt, dass der Querpositionierungsfehler (Δx) des Bildträgers (P) quer zur Transportrichtung des Bildträgers relativ zu einer Sollposition auf der Aufzeichnungsbühne (10) ermittelt wird und dass eine Bildverschiebung um den Querpositionierungsfehler (Δx) durch entsprechende örtliche Verstellung zumindest von Teilen der Abbildungsoptik (5-8) durchgeführt wird.

3. Verfahren nach Anspruch 2, **dadurch gekennzeichnet, dass** die quer zur Transportrichtung gemessene Breite (B) des Bildträgers (P) ermittelt wird und dass eine Anpassung der Bildgrösse an die ermittelte Breite (B) des Bildträgers (P) durch entsprechende Verstellung zumindest von Teilen der Abbildungsoptik (5-8) durchgeführt wird.

4. Verfahren nach Anspruch 1, **dadurch gekennzeichnet, dass** die digitalen Bilddaten der Vorlage (V) für die Positions- und Grössenkorrektur anhand der bei der Vermessung des Bildträgers ermittelten Vermessungsdaten (Δx, Δy, B, L, α) rechnerisch transformiert werden und dass die transformierten Bilddaten der Vorlage (V) auf den Bildträger (P) aufgezeichnet werden.

5. Verfahren nach Anspruch 4, **dadurch gekennzeichnet, dass** der Querpositionierungsfehler (Δx) des Bildträgers (P) quer zur Transportrichtung des Bildträgers relativ zu einer Sollposition auf der Aufzeichnungsbühne (10) ermittelt wird und dass bei der Transformation der Bilddaten eine Bildverschiebung um den Querpositionierungsfehler (Δx) durchgeführt wird.

6. Verfahren nach einem der Ansprüche 4-5, **dadurch gekennzeichnet, dass** die quer zur Transportrichtung gemessene Breite (B) des Bildträgers (P) ermittelt wird und dass bei der Transformation der Bilddaten eine Anpassung der Bildgrösse an die ermittelte Breite (B) des Bildträgers (P) durchgeführt wird.

7. Verfahren nach einem der Ansprüche 4-6, **dadurch gekennzeichnet, dass** der Längspositionierungsfehler (Δy) des Bildträgers (P) parallel zur Transportrichtung des Bildträgers relativ zu einer Sollposition auf der Aufzeichnungsbühne (10) ermittelt wird und dass bei der Transformation der Bilddaten eine Bildverschiebung um den Längspositionierungsfehler (Δy) durchgeführt wird.

8. Verfahren nach einem der Ansprüche 4-7, **dadurch gekennzeichnet, dass** die parallel zur Transportrichtung gemessene Länge (L) des Bildträgers (P) ermittelt wird und dass bei der Transformation der Bilddaten eine Anpassung der Bildgrösse an die ermittelte Länge (L) des Bildträgers (P) durchgeführt wird.

9. Verfahren nach einem der Ansprüche 4-8, **dadurch gekennzeichnet, dass** der Verdrehungswinkel (α) des Bildträgers (P) relativ zu einer Sollwinkellage auf der Aufzeichnungsbühne (10) ermittelt wird und dass bei der Transformation der Bilddaten eine Bilddrehung um den Verdrehungswinkel (α) durchgeführt wird.

10. Verfahren nach einem der Ansprüche 4-9, **dadurch gekennzeichnet, dass** die Vermessung des Bildträgers (P) mittels einer fotoelektrischen Abtasteinrichtung (21) erfolgt, welche an der Aufzeichnungsbühne (10) oder in unmittelbarer Nähe derselben angeordnet ist.

11. Vorrichtung zur Herstellung eines Bilds von einer in elektronischer Form vorliegenden Vorlage (V) durch bildpunktweises Aufzeichnen der digitalen Bilddaten der Vorlage auf einen blattförmigen Bildträger (P), mit einem Speicher (1) für die Aufnahme der Bilddaten der Vorlage (V), mit einer Aufzeichnungsbühne (10), auf der der Bildträger (P) in einer Aufzeichnungsposition positioniert werden kann, mit Transportmitteln (11) zum Transport des Bildträgers (P) auf der Aufzeichnungsbühne (10), und mit einer digitalen Aufzeichnungseinrichtung (2-9) zur Aufzeichnung der Bilddaten der Vorlage (V) auf den auf der Aufzeichnungsbühne (10) positionierten Bildträger (P), **dadurch gekennzeichnet, dass** an oder in unmittelbarer Nähe der Aufzeichnungsbühne (10) eine fotoelektrische Abtasteinrichtung (21) für den Bildträger (P) vorgesehen ist und dass ein mit der Abtasteinrichtung zusammenwirkender Positionsrechner (22) vorgesehen ist, wobei die Abtasteinrichtung (21) und der Positionsrechner (22) dazu ausgebildet sind, den Bildträger (P) hinsichtlich Grösse und relativer Lage zur Aufzeichnungsbühne (10) zu vermessen und entsprechende Vermessungsdaten (Δx, Δy, B, L, α) zu ermitteln, und dass eine mit dem Positionsrechner (22) zusammenwirkende Steuerung (2) vorgesehen ist, welche anhand der bei der Vermessung des Bildträgers ermittelten Vermessungsdaten (Δx, Δy, B, L, α) eine Positions- und Grössenkorrektur für die Aufzeichnung der digitalen Bilddaten der Vorlage (V) auf den blattförmigen Bildträger (P) durchführt.

12. Vorrichtung nach Anspruch 11, **dadurch gekennzeichnet, dass** die Aufzeichnung der Bilddaten unter Verwendung einer Abbildungsoptik (5-8) durch Aufbelichtung erfolgt, dass der Positionsrechner (22) dazu ausgebildet ist, aus den von der Abtasteinrichtung (21) erzeugten Abtastsignalen einen Querpositionierungsfehler (Δx) des Bildträgers (P) quer zu seiner Transportrichtung relativ zu einer Sollposition auf der Aufzeichnungsbühne (10) zu ermitteln, und dass die Steuerung (2) dazu ausgebildet ist, eine Bildverschiebung um den Querpositionierungsfehler (Δx) durch entsprechende örtliche Verstellung zumindest von Teilen der Abbildungsoptik (5-8) durchzuführen.

13. Vorrichtung nach Anspruch 12, **dadurch gekennzeichnet, dass** der Positionsrechner (22) dazu ausgebildet ist, aus den von der Abtasteinrichtung (21) erzeugten Abtastsignalen die quer zu seiner Transportrichtung gemessene Breite (B) des Bildträgers (P) zu ermitteln, und dass die Steuerung (2) dazu ausgebildet ist, eine Anpassung der Bildgrösse an die ermittelte Breite (B) des Bildträgers (P) durch entsprechende Verstellung zumindest von Teilen der Abbildungsoptik (5-8) durchzuführen.

14. Vorrichtung nach Anspruch 11, **dadurch gekennzeichnet, dass** die Steuerung (2) dazu ausgebildet ist, zur Durchführung der Positions- und Grössenkorrektur die Bilddaten der Vorlage (V) vor der Aufzeichnung auf den Bildträger (P) nach Massgabe der Vermessungsdaten (Δx, Δy, B, L, α) rechnerisch zu transformieren.

15. Vorrichtung nach einem der Ansprüche 11-14, **dadurch gekennzeichnet, dass** die Abtasteinrichtung (21) im Transportweg des Bildträgers (P) auf der Aufzeichnungsbühne (10) angeordnet ist und sich quer über die Aufzeichnungsbühne (10) erstreckt.

16. Vorrichtung nach Anspruch 15, **dadurch gekennzeichnet, dass** die Abtasteinrichtung (21) eine Beleuchtungsanordnung (21b) zur Beaufschlagung des Bildträgers (P) mit Messlicht und eine lineare Anordnung von fotoelektrischen Wandlerelementen (21a) aufweist, die das vom Bildträger (P) remittierte Messlicht empfangen und in entsprechende elektrische Signale umwandeln.

17. Vorrichtung nach einem der Ansprüche 14-16, **dadurch gekennzeichnet, dass** der Positionsrechner (22) dazu ausgebildet ist, aus den von der Abtasteinrichtung (21) erzeugten Abtastsignalen einen Querpositionierungsfehler (Δx) des Bildträgers (P) quer zu seiner Transportrichtung relativ zu einer Sollposition auf der Aufzeichnungsbühne (10) zu ermitteln, und dass die Steuerung (2) dazu ausgebildet ist, bei der Transformation der Bilddaten der Vorlage (V) eine Bildverschiebung um den Querpositionierungsfehler (Δx) durchzuführen.

18. Vorrichtung nach einem der Ansprüche 14-17, **dadurch gekennzeichnet, dass** der Positionsrechner (22) dazu ausgebildet ist, aus den von der Abtasteinrichtung (21) erzeugten Abtastsignalen einen Längspositionierungsfehler (Δy) des Bildträgers (P) parallel zu seiner Transportrichtung relativ zu einer Sollposition auf der Aufzeichnungsbühne (10) zu ermitteln, und dass die Steuerung (2) dazu ausgebildet ist, bei der Transformation der Bilddaten der Vorlage (V) eine Bildverschiebung um den Längspositionierungsfehler (Δy) durchzuführen.

19. Vorrichtung nach einem der Ansprüche 14-18, **dadurch gekennzeichnet, dass** der Positionsrechner (22) dazu ausgebildet ist, aus den von der Abtasteinrichtung (21) erzeugten Abtastsignalen die quer zu seiner Transportrichtung gemessene Breite (B) des Bildträgers (P) zu ermitteln, und dass die Steuerung (2) dazu ausgebildet ist, bei der Transformation der Bilddaten der Vorlage (V) eine Anpassung der Bildgrösse an die ermittelte Breite (B) des Bildträgers (P) durchzuführen.

20. Vorrichtung nach einem der Ansprüche 14-19, **dadurch gekennzeichnet, dass** der Positionsrechner (22) dazu ausgebildet ist, aus den von der Abtasteinrichtung (21) erzeugten Abtastsignalen die parallel zu seiner Transportrichtung gemessene Länge (L) des Bildträgers (P) zu ermitteln, und dass die Steuerung (2) dazu ausgebildet ist, bei der Transformation der Bilddaten der Vorlage (V) eine Anpassung der Bildgrösse an die ermittelte Länge (L) des Bildträgers (P) durchzuführen.

21. Vorrichtung nach einem der Ansprüche 14-21, **dadurch gekennzeichnet, dass** der Positionsrechner (22) dazu ausgebildet ist, aus den von der Abtasteinrichtung (21) erzeugten Abtastsignalen einen Verdrehungswinkel (α) des Bildträgers (P) relativ zu einer Sollwinkellage auf der Aufzeichnungsbühne (10) zu ermitteln, und dass die Steuerung (2) dazu ausgebildet ist, bei der Transformation der Bilddaten der Vorlage eine Bilddrehung um den Verdrehungswinkel (α) des Bildträgers (P) durchzuführen.
